(19) Europäisches Patentamt
European Patent Office
Office européen des brevets

(11) **EP 2 650 575 B1**

(12) **EUROPEAN PATENT SPECIFICATION**

(45) Date of publication and mention
of the grant of the patent:
**01.04.2015 Bulletin 2015/14**

(51) Int Cl.:
***F16K 31/40*** *(2006.01)*

(21) Application number: **13154324.1**

(22) Date of filing: **07.02.2013**

(54) **Composite valve**

Verbundventil

Soupape composite

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2012 JP 2012029659
14.02.2012 JP 2012029712**

(43) Date of publication of application:
**16.10.2013 Bulletin 2013/42**

(73) Proprietor: **Fujikoki Corporation
Tokyo 158-0082 (JP)**

(72) Inventors:
• **Kannoo, Takeshi
Setagaya-ku, Tokyo 158-0082 (JP)**
• **Arai, Yusuke
Setagaya-ku, Tokyo 158-0082 (JP)**
• **Yamashita, Masashi
Setagaya-ku, Tokyo 158-0082 (JP)**

(74) Representative: **Schweiger, Martin
Schweiger & Partner
Karlstraße 35
80333 München (DE)**

(56) References cited:
**EP-A2- 1 435 495    WO-A1-2007/149229**

**Description**

**BACKGROUND OF THE INVENTION**

**Field of the Invention**

The present invention relates to a composite valve which is preferably used in a heat pump type cooling and heating system or the like, and more particularly to a composite valve which is provided with a pilot type large flow rate control valve and a small flow rate control valve.

**Description of the Conventional Art**

As a heat pump type cooling and heating system, there has been known a structure which is provided with a compressor, a condenser, an evaporator, an expansion valve and a four-way valve for switching (inverting) a cooling medium flow path.

On the other hand, as a heat pump type cooling and heating system for a vehicle (for example, for an electric vehicle), there has been proposed a system which does not invert a flow of a cooling medium and is provided independently with an expansion valve for cooling and an expansion valve for heating, for example, as seen in Fig. 1 of patent document 1.

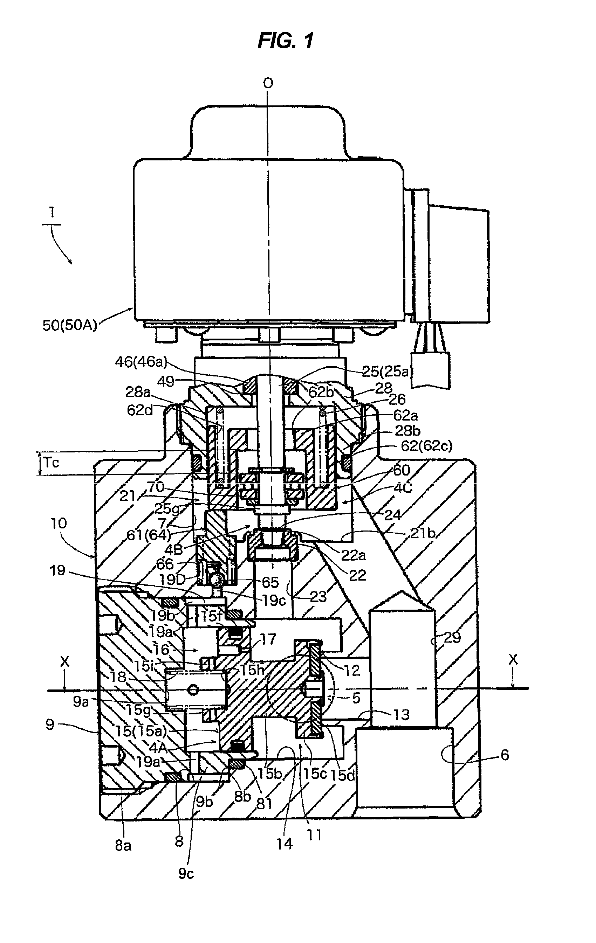

The flow of the cooling medium is not inverted in the system mentioned above. Accordingly, for example, paying attention to an expansion valve for heating (reference numeral 24) shown in Fig. 1 of the document, the system is structured such that an electromagnetic valve for cooling (reference numeral 26) is provided in parallel to the expansion valve for heating, the cooling medium is narrowed down by the expansion valve for heating by closing the electromagnetic valve for cooling at a time of heating, and the inlet and outlet of the expansion valve for heating is bypassed by opening the electromagnetic valve for cooling at a time of cooling, thereby preventing the expansion valve from narrowing down the cooling medium.

In the meantime, in the case that the expansion valves and the electromagnetic valves for bypassing are respectively provided for cooling and heating, the system is enlarged in size, a cost for assembling a piping becomes high, and there is further a risk that an electric power consumption is enlarged.

Accordingly, it is conceivable that these functions are achieved by one electrically operated valve. In other words, for example, the cooling medium may be narrowed down by the electrically operated valve at a time of heating, and the electrically operated valve may be fully opened at a time of cooling.

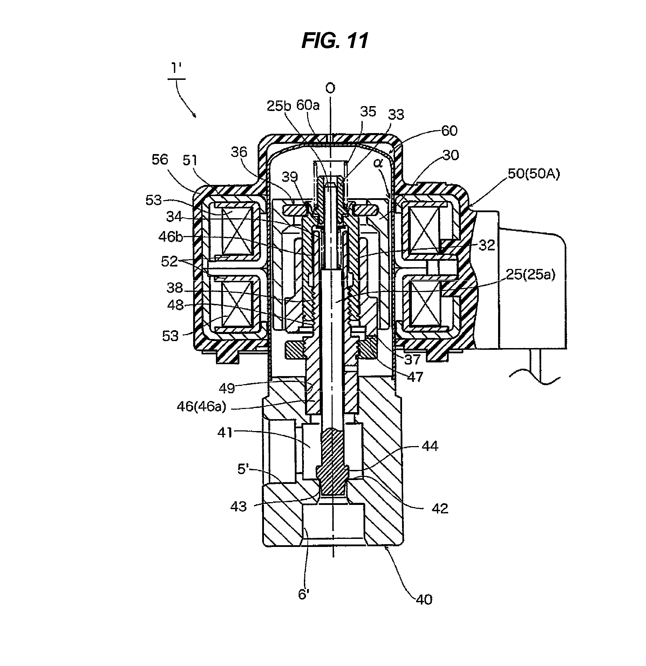

In this case, a description will be given of one example of a conventional electrically operated valve with reference to Fig. 11.

An electrically operated valve 1' in an illustrated example is provided with a valve shaft 25 which has a lower shaft portion 25a and an upper small diameter shaft portion 25b, a valve main body 40 which has a valve chamber 41, a can 60 which is bonded in a sealing manner to the valve main body 40 in its lower end portion, a rotor 30 (a rotating axis O) which is arranged in an inner periphery of the can 60 so as to be spaced at a predetermined gap $\alpha$, and a stator 50A which is outward fitted to the can 60 so as to rotationally drive the rotor 30.

The valve shaft 25 is integrally provided with a valve body portion 44 having a specific shape (two stages of inverted circular truncated cone shapes respectively having predetermined angles of center) in a lower end portion of the lower shaft portion 25a, and the present electrically operated valve 1' is structured such that a passing flow rate of the cooling medium is controlled by changing a lift amount of the valve body portion 44.

The valve chamber 41 of the valve main body 40 is provided in its lower portion with a valve seat 42 with a valve port (an orifice) 43 which the valve body portion 44 comes close to and away from, and is opened in its side portion to a first inlet and outlet 5', and a lower portion of the valve main body 40 is provided with a second inlet and outlet 6' so as to be connected to the valve port 43.

The stator 50A is constructed by a yoke 51, a bobbin 52, a stator coil 53, a resin mold cover 56 and the like, a stepping motor 50 is constructed by the rotor 30, the stator 50A and the like, and an elevation driving mechanism for regulating a lift amount (= an opening degree) of the valve body portion 44 in relation to the valve port 43 is constructed by the stepping motor 50, a feed screw (a female thread portion 38 and a male thread portion 48) mentioned below and the like.

A support ring 36 is integrally connected to the rotor 30, and an upper protruding portion of a lower opened and tubular valve shaft holder 32 which is arranged in an outer periphery of a guide bush 46 is fixed, for example, by caulking to the support ring 36, whereby the rotor 30, the support ring 36 and the valve shaft holder 32 are integrally connected.

Further, a lower end portion 46a of the tubular guide bush 46 is pressed into and fixed to a fitting hole 49 provided in an upper portion of the valve main body 40, and (the lower shaft portion 25a of) the valve shaft 25 is inward inserted slidably to the guide bush 46. Further, in order to move up and down the valve shaft 25 (the valve body portion 44) by utilizing a rotation of the rotor 30, the male thread portion 48 is formed in an outer periphery of the guide bush 46, the female thread portion 38 is formed in an inner periphery of the valve shaft holder 32, and the feed screw is constructed by the male thread portion 48 and the female thread portion 38.

Further, an upper small diameter portion 46b of the guide bush 46 is inward inserted to an upper portion of the valve shaft holder 32, and the upper small diameter shaft portion 25b of the valve shaft 25 is inserted to (a through hole formed in) the center of a ceiling portion of the valve shaft holder 32. A push nut 33 is pressed into and fixed to an upper end portion of the upper small diameter shaft portion 25b of the valve shaft 25.

Further, the valve shaft 25 is outward inserted to the upper small diameter shaft portion 25b of the valve shaft 25, and is normally energized downward (in a valve closing direction) by a valve closing spring 34 constructed by a compression coil spring which is installed in a compression manner between a ceiling portion of the valve shaft holder 32 and an upper end terrace surface of the lower shaft portion 25a in the valve shaft 25. A restoring spring 35 constructed by a coil spring is provided in an outer periphery of the push nut 33 on the ceiling portion of the valve shaft holder 32, the coil spring being provided for returning in the case that the valve shaft 25 moves in the valve opening direction and an engagement between the female thread portion 38 and the male thread portion 48 is disconnected.

To the guide bush 46, there is firmly fixed a lower stopper body (a fixing stopper) 47 which constructs one of rotation and downward movement stopper mechanisms for inhibiting a further rotation and downward movement at a time when the rotor 30 is rotated and moved downward to a predetermined valve closing position, and to the valve shaft holder 32, there is firmly fixed an upper stopper body (a movable stopper) 37 which constructs the other of the stopper mechanisms.

In this case, the valve closing spring 34 is arranged for obtaining a desired seal pressure in a valve closed state in which the valve body portion 44 seats on the valve port 43 (preventing a leakage), and for reducing an impact at a time when the valve body portion 44 comes into contact with the valve port 43.

In the electrically operated valve 1' structured as mentioned above, the rotor 30 and the valve shaft holder 32 are rotated in one direction in relation to the guide bush 46 which is fixed to the valve main body 40, by supplying an electrifying and exciting pulse to the motor 50 (the stator 50A) in accordance with a first mode, and on the basis of a screw feeding of the thread portions 48 and 38, for example, the valve shaft holder 32 moved downward, the valve body portion 44 is pressed to the valve seat 42, and the valve port 43 is closed.

At a time point when the valve port 43 is closed, the upper stopper body 37 has not come into contact with the lower stopper body 47 yet, and the rotor 30 and the valve shaft holder 32 further rotate and move downward while the valve body portion 44 closes the valve port 43. In this case, since the valve shaft 25 (the valve body portion 44) does not move downward, however, the valve shaft holder 32 moves downward, the valve closing spring 34 is compressed at a predetermined amount. As a result, the valve body portion 44 is strongly pressed to the valve seat 43, the upper stopper body 37 comes into contact with the lower stopper body 47 on the basis of the rotation and the downward movement of the valve shaft holder 32, and the rotation and the downward movement of the valve shaft holder 32 are forcibly stopped even if the pulse supply in relation to the stator 50A is thereafter carried on (a fully closed state).

On the other hand, if the electrifying and exciting pulse is supplied in accordance with a second mode to the stator 50A from this fully closed state, the rotor 30 and the valve shaft holder 32 are rotated in a reverse direction to the direction mentioned above in relation to the guide bush 46 which is fixed to the valve main body 40, and the valve shaft holder 32 moves upward this time on the basis of the screw feeding of the thread portions 48 and 38. In this case, since the valve closing spring 34 is compressed at the predetermined amount as mentioned above, at a time point of starting the rotation and the upward movement of the valve shaft holder 32 (a time point of starting the pulse supply), the valve body portion 44 is not disconnected from the valve seat 42 and remains in the valve closed state (a lift amount = 0) until the valve closing spring 34 extends at the predetermined amount mentioned above. Further, if the valve shaft holder 32 is further rotated and moved upward after the valve closing spring 34 extends at the predetermined amount, the valve body portion 44 is disconnected from the valve seat 42 and the valve port 43 is opened, so that the cooling medium passes through the valve port 43.

In this case, it is possible to optionally and finely regulate the lift amount of the valve body portion 44, in other words, an effective opening area (= an opening degree) of the valve port 43 on the basis of an amount of rotation of the rotor 30. Further, since the amount of rotation of the rotor 30 can be controlled by a supply pulse number, it is possible to control a flow rate of the cooling medium at a high precision.

Accordingly, in the case that the electrically operated valve 1' having the structure mentioned above is employed as the electrically operated valve having both functions of the expansion valve and the bypass valve shown in the patent document 1 mentioned above, the electrically operated valve is structured, for example, the opening degree (the lift amount) is set to a maximum opening degree (a maximum lift amount) in such a manner as to reduce the pressure loss as much as possible so as to serve as the bypass valve at a time of the cooling operation, and is regulated so as to server as the expansion valve at a time of the heating operation, thereby finely controlling the valve opening degree, that is, the flow rate of the cooling medium.

However, in the electrically operated valve 1', an improvement of the precision of controlling the flow rate in the small flow rate region and an increase of the controllable flow rate form an antinomy theory. In other words, in order to make the electrically operated valve 1' serve as the expansion valve, it is necessary to secure a high precision of controlling the flow rate in the small flow rate region, and it is demanded to make a resolving power of the flow rate control higher for this purpose. Therefore, it is necessary to make a valve bore diameter (an effective opening area) as small as possible. On the contrary, in order to make the electrically operated valve 1' serve as the electromagnetic valve for bypassing, it is demanded to suppress the pressure loss as much as possible. Therefore, it is impossible to make the valve bore diameter so small (smaller than an effective passage cross sectional area of the piping system). In other words, if the valve bore diameter is made smaller, it is possible to make the precision of the flow rate control in the small flow rate region higher, however, when the flow rate (the controllable flow rate) of the cooling medium circulating in the system is intended to be increased, the valve opening portion forms a resistance and the pressure loss becomes larger even by maximizing the valve opening degree. On the contrary, if the valve bore diameter is made larger, it is possible to achieve the increase of the controllable flow rate (the reduction of the pressure loss), however, the precision of the flow rate control in the small flow rate region is lowered, and it is necessary to enlarge the valve body in conformity to the valve bore diameter, so that a great torque is required for driving the valve body, and there is a risk of an enlargement in size and an increase of an electric power consumption.

Further, if the resolving power is made higher (for example, the valve body lift amount per one rotation of the rotor is made smaller) for achieving an improvement of the flow rate control precision in the small flow rate region, it takes long time to reach a full open state (a flow path bypass state) from a small flow rate control state, and an opening gap (a gap between the valve body portion and the valve port wall surface) at a time of the small flow rate control becomes very narrow, so that there is a risk that a foreign material or the like is bitten into the gap so as to be clogged.

Accordingly, in order to achieve both an improvement of a flow rate control precision and an increase of a controllable flow rate (a reduction of the pressure loss) in the small flow rate region, and achieve a reduction of a desired time from the small flow rate control state to the fully opened state, and a reduction of the electric power consumption, the following patent document 2 discloses a provision of a pilot type first control valve (a first valve body and a first valve port) for a large flow rate and a second control valve (a second valve body and a second valve port) for a small flow rate, in more detail, a composite valve structured such as to open and close the first valve port having a larger bore diameter by the piston type first valve body, open and close the second valve port having a smaller bore diameter by the needle type second valve body which is an independent body from the first valve body and is provided in the lower portion of the valve shaft (25), and make the second control valve for the small flow rate also serve as the pilot valve of the first control valve for the large flow rate.

In this composite valve, when the lift amount of the valve shaft (the second valve body) is equal to or less than a predetermined amount (when the second control valve opening degree is equal to or less than a predetermined value), there is established a small flow rate control state in which the first valve body closes the first valve port, and the second control valve opening degree for the small flow rate is controlled by the second valve body. At this time, the cooling medium at an amount corresponding to the lift amount (the second control valve opening degree) of the second valve body flows to the inflow port → the first valve chamber → the gap of the sliding surface formed between the outer peripheral surface of the first valve body and the wall surface of the first valve chamber → the back pressure chamber → the pilot passage → the second valve chamber → the second valve port → the outflow passage → the outflow port. Further, if the lift amount of the valve shaft (the second valve body) goes beyond the predetermined amount, the amount of the cooling medium flowing out of the back pressure chamber via the second valve port is increased in comparison with the small flow rate control time, the pressure of the back pressure chamber is lowered, and the valve opening force becomes finally larger than the valve closing force acting on the first valve body, whereby the first valve body opens the first valve port, and there is established a large flow rate control state in which the cooling medium flows to the inflow port → the first valve chamber → the first valve port → the outflow port.

As mentioned above, it is possible to achieve both the improvement of the flow rate control precision in the small flow rate region and the increase of the controllable flow rate (the reduction of the pressure loss), and the reduction of the electric power consumption, by opening and closing the first valve port having the large bore diameter by means of the first valve body, opening and closing the second valve port having the small bore diameter by means of the second valve body, and making the second valve body serve as the pilot valve of the first control valve for the large flow rate.

However, in the composite valve described in the patent document 2 mentioned above, since the single second control valve for the small flow rate serves as the control valve for the small flow rate region and the pilot valve in relation to the first control valve for the large flow rate, there is a risk that the following problems may be generated. In other words, since it is necessary to widely increase the flow rate of the cooling medium passing through the second control valve for the small flow rate in comparison with the small flow rate control time, in order to switch from the small flow rate control to the large flow rate control, it is necessary to set the bore diameter (the effective opening area) of the second valve port significantly larger than the bore diameter which is necessary for the small flow rate control. Accordingly, an increase of a motion load, and an enlargement in size of a driving portion (a motor portion) and a valve main body tend to be caused, and a dimension and a shape of the second control valve for the small flow rate can not be set to

4

those which are optimum for the small flow rate control, so that there has been a problem that a flow rate control precision at a time of the small flow rate control can not be enhanced so much.

Further, since the opening and closing motion of the first control valve for the large flow rate depends on the lift amount of the second valve body changing subtly, there is not a little a case that the opening and closing motion of the first control valve for the large flow rate is not carried out at a desired timing. Further, since the cooling medium is circulated via the sliding surface gap of the first valve body → the back pressure chamber → the pilot passage at a time of the small flow rate control, there is a problem that a malfunction caused by a small foreign material mixing into the cooling medium (for example, the locking of the first valve body caused by the biting of the small foreign material into the sliding surface gap) tends to be generated.

Accordingly, the inventors of the present invention have in advance proposed a composite valve as described in patent document 3 for dissolving the problems mentioned above. The composite valve is provided with a piston type first valve body, a valve shaft having a needle type second valve body, an elevation driving means for moving up and down the valve shaft, a pilot valve body driven so as to be opened and closed by utilizing the elevating motion of the valve shaft, and a valve main body having an inflow port and an outflow port, and is structured such that between the inflow port and the outflow port in the valve main body, there are provided a fitting and inserting chamber to which the first valve body is slidably fitted and inserted, and which is comparted into a back pressure chamber and a first valve chamber by the first valve body, a first valve port which is open to the first valve chamber, a second valve chamber in which the pilot valve body and the second valve body are arranged so as to be movable up and down, a second valve port which communicates the inflow port or the first valve chamber with the second valve chamber, and a pilot passage which communicates the back pressure chamber with the second valve chamber, and in the case that a lift amount of the second valve body is equal to or less than a predetermined amount, the pilot passage is closed by the pilot valve body, and the first valve port is closed by the first valve body, thereby taking a small flow rate control state in which a flow rate is controlled in correspondence to the lift amount of the second valve body, and in the case that the lift amount of the second valve body goes beyond the predetermined amount, the pilot valve body is moved up in conjunction with the upward movement of the valve shaft so as to open the pilot passage, thereby taking a large flow rate control state in which the first valve body opens the first valve port on the basis of this motion.

In the proposed composite valve mentioned above, the second valve body for the small flow rate is the independent body from the pilot valve body for driving the first valve body for the large flow rate so as to open and close, the small flow rate control is carried out by the second valve body until the second valve body lifts at the predetermined amount, and the pilot valve body is pulled up and the pilot passage is opened in the case that the second valve body is lifted at the predetermined amount or more, whereby the first valve body is opened. Therefore, there can be achieved excellent effect that it is possible to set the dimension and the shape of the second control valve for the small flow rate to those which are optimum for the small flow rate control, it is possible to securely open and close the first control valve for the large flow rate at a desired timing, and a malfunction is hard to be caused.

EP 1 435 495 A2 discloses, in a switching valve, a first valve is disposed between an inlet port and a first outlet port. A pilot valve is provided between a back pressure chamber for a movable plug that holds a valve sheet opposed to a valve seat, and the first outlet port. The first valve is pilot operated by a solenoid. A second valve is arranged between the inlet port and a second outlet port. A back pressure chamber for a movable plug that holds a valve sheet opposed to a valve seat and the first outlet port communicate.

WO 2007/149229 A1 discloses a valve capable of bidirectional operation including a housing with a first port and a second port. The valve includes a first valve member. Additionally, the valve includes valve controls which control the position of the first valve member with fluid supplied to a control chamber. The valve controls include additional valve members operable to meter fluid flow to and from the control chamber. Additional valve members include a pilot poppet. The valve controls include a spring compressed between the first valve member and the pilot poppet for controlling the position of the additional valve members as a function of the position of the first valve member, so that undesirable movements of the first valve member are dampened.

**Prior Art Technical Publication**

**Patent Document**

Patent Document 1 : Japanese Patent No. 3799732
Patent Document 2: Japanese Patent No. 4416528
Patent Document 3: Japanese Patent Application No. 2011-68451 (Japanese Unexamined Patent Publication No. 2012-202499)
Patent Document 4: European Patent Application No. EP 1 435 495 A2

Patent Document 5: International Patent Application No. WO 2007/149229 A1

## SUMMARY OF THE INVENTION

### Problem to be Solved by the Invention

However, in the composite valve proposed in advance, the following problems to be improved have existed.

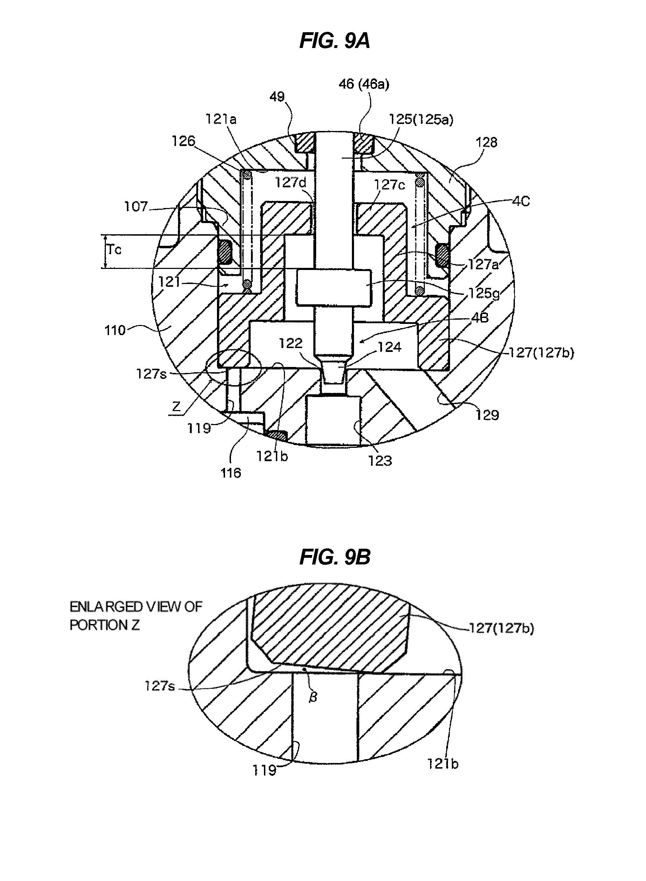

First of all, an example of a specific structure of a substantial part of the composite valve mentioned above will be shown in Fig. 9A. As illustrated, (a center insertion hole 127d of) an upper side portion 127c of a pilot valve body 127 is outward inserted slidably to an upper side than a second valve body 124 in a valve shaft 125, the pilot valve body 127 being provided with a large diameter cylinder portion 127b having a flat annular lower end surface 127s and a small diameter cylinder portion 127a and being formed as a convex cross sectional shape in an outer form.

The pilot valve body 127 is provided in such a manner as to slide on an inner wall of a second valve chamber 121 which is formed in a valve main body 110, and is threadably fixed to a valve main body 40 in such a manner that a bush retaining body 128 corresponding to an upper portion of the valve main body 40 shown in Fig. 11 covers the second valve chamber 121. The bush retaining body 128 retains a lower end portion 46a of a guide bush 46.

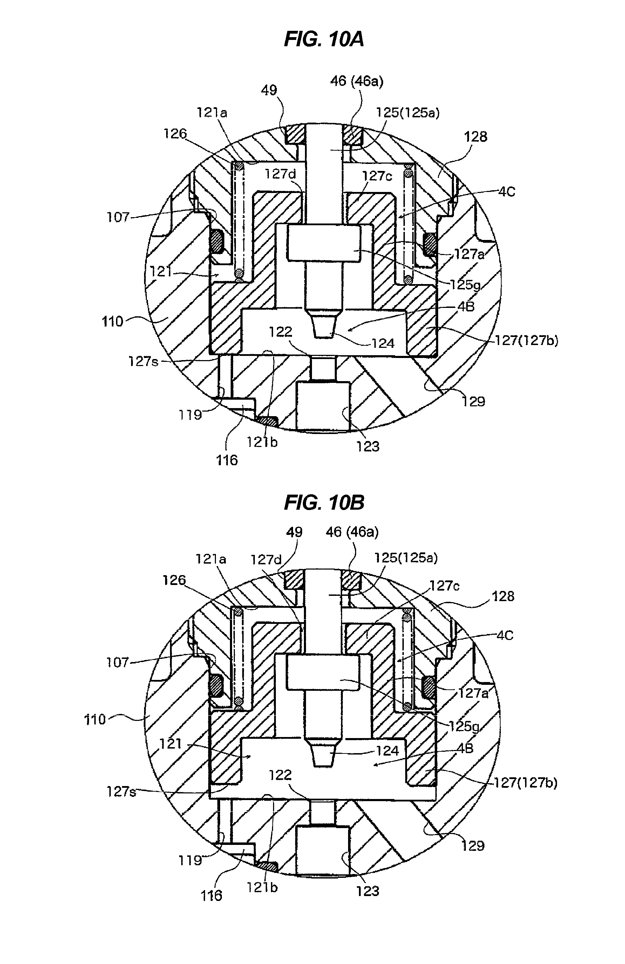

The pilot valve body 127 is structured such as to open and close (an upper end opening of) a pilot passage 119 which communicates a back pressure chamber 116 formed at the back of the first valve body with the second valve chamber 121 by making the annular lower end surface 127s close to and away from a bottom surface 121 b of the second valve chamber 121 (an upper end opening edge portion of the pilot passage 119), so as to open and close the first valve body which does not appear in the drawing, and is energized downward by a pilot valve closing spring 126 constructed by a compression coil spring, as well as being slidably fitted and inserted the large diameter cylinder portion 127b into a concave hole 107. As can be well known with reference to Figs. 9A and 10A, the pilot valve body 127 is structured such that a collar shaped catch portion 125g provided in the valve shaft 125 comes into contact with an upper side portion 127c if a lift amount of a valve shaft 125 which is moved up and down while being rotated by a stepping motor (not shown) reaches a predetermined amount Tc, and the pilot valve body 127 is pulled up against an energizing force of a pilot valve closing spring 126 by means of the collar shaped catch portion 125g of the valve shaft 125 so as to open the pilot passage 119 as shown in Fig. 10B if the lift amount of the valve shaft 125 goes beyond the predetermined amount Tc.

As mentioned above, the composite valve proposed in advance is structured such that (an upper end opening of) the pilot passage 119 is opened and closed by making the flat annular lower end surface 127s of the pilot valve body 127 close to and away from the flat bottom surface 121 b of the second valve chamber 121 (the upper end opening edge portion of the pilot passage 119). Accordingly, in the valve closing state, the pressure in the back pressure chamber of the large flow rate control valve concentrically acts on a part of the annular lower end surface 127s of the pilot valve body 127 through the pilot passage 119, and the pilot valve body 127 tends to be inclined. If the pilot valve body 127 is inclined, a gap $\beta$ is generated between the annular lower end surface 127s of the pilot valve body 127 and the bottom surface 121 b of the second valve chamber 121, as shown in Fig. 9B, whereby the pressure in the back pressure chamber evacuates to the second valve chamber 121 side through the pilot passage 119. A problem that the first valve body opens undesirably tends to be generated.

Further, due to the structure in which (the upper end opening of) the pilot passage 119 is closed by bringing the annular lower end surface 127s of the pilot valve body 127 into surface contact with the bottom surface 121b of the second valve chamber 121 (the upper end opening edge portion of the pilot passage 119), a contact pressure of the seal surface (between the annular lower end surface 127s and the bottom surface 121 b) is weak and a desired sealing performance is hard to be obtained. In this case, in order to enhance the sealing performance, it is conceivable to employ a countermeasure of enlarging a spring load of the pilot valve closing spring 126 and increasing a working precision of the seal surface. However, both cases have problems in a cost (if the spring load of the pilot valve closing spring 126 is enlarged, it is necessary to employ a motor having a great driving torque for moving up and down the pilot valve body 127, and a corresponding cost is required for enhancing the working precision of the seal surface).

The present invention is made by taking the circumstance mentioned above into consideration, and an object of the present invention is to provide a composite valve which is provided with a pilot type first control valve for a large flow rate, a second control valve for a small flow rate and a pilot valve in relation to the first control valve for the large flow rate, can set a dimension and a shape of the second control valve for the small flow rate to those which are optimum for the small flow rate control, can securely carry out an opening and closing operation of the first control valve for the large flow rate at a desired timing, can enhance a sealing performance of the pilot passage by the pilot valve, and can securely prevent the pilot passage from being undesirably opened, in order to achieve both an improvement of a flow rate control precision in the small flow rate region and an increase of a controllable flow rate (a reduction of a pressure loss). Accordingly, the present invention can provide the composite valve which can enhance a reliability and can suppress a cost increase, an enlargement in size and an increase of an electric power consumption as much as possible.

**Means for Solving the Problem**

In order to achieve the object mentioned above, a composite valve according to a first invention of the present invention is basically provided with a piston type first valve body, a valve shaft provided with a needle type second valve body, an elevation driving means for positioning the valve shaft up and down, a pilot valve body driven so as to be opened and closed by utilizing the elevating motion of the valve shaft, and a valve main body provided with an inflow port and an outflow port, and is structured such that between the inflow port and the outflow port in the valve main body, there are provided a fitting and inserting chamber to which the first valve body is slidably fitted and inserted, and which is comparted into a back pressure chamber and a first valve chamber by the first valve body, a first valve port which is open to the first valve chamber, a second valve chamber in which the pilot valve body and the second valve body are arranged so as to be movable up and down, a second valve port which communicates the inflow port or the first valve chamber with the second valve chamber, and a pilot passage which is open at its upper end to a bottom surface of the second valve chamber so as to communicate the back pressure chamber with the second valve chamber, and such that in the case that a lift amount of the second valve body is equal to or less than a predetermined amount, the pilot passage is closed by the pilot valve body, and the first valve port is closed by the first valve body, thereby taking a small flow rate control state in which a flow rate is controlled in correspondence to the lift amount of the second valve body, and in the case that the lift amount of the second valve body goes beyond the predetermined amount, the pilot valve body is moved up in conjunction with the upward movement of the valve shaft so as to open the pilot passage, thereby taking a large flow rate control state in which the first valve body opens the first valve port on the basis of this motion, characterized in that the pilot valve body is provided with a valve body member, and a valve body pressing member which is energized downward by a spring member so as to position the valve body member close to or away from an opening edge portion of the pilot passage, and is pulled up against an energizing force of the spring member by a catch portion provided in the valve shaft, if the lift amount of the second valve body is increased further from the predetermined amount.

Accordance to a preferable aspect, a spring member energizing the valve body member upward is provided.

According to the other preferable aspect, the valve body member is constructed by a curved surface in which a seal surface which is positioned close to or away from an opening edge portion of the pilot passage substantially comes into line contact with the opening edge portion constructed by a spherical surface, an oval spherical surface or a circular cone surface.

Accordance to the other preferable aspect, the valve body member is constructed by a ball which is positioned close to or away from an opening edge portion of the pilot passage, and a retaining body which holds the ball.

Accordance to the other preferable aspect, the first valve body is provided with a pressure equalizing hole which communicates the first valve chamber with the back pressure chamber.

Accordance to the other preferable aspect, the first valve body is arranged transversally and the second valve body is arranged vertically.

Accordance to the other preferable aspect, the first valve body and the second valve body are both arranged in a vertical direction and are separated from each other at a predetermined distance in a transverse direction.

The elevation driving means is preferably structured such as to move the valve shaft up and down while rotating.

**Effect of the Invention**

In the composite valve according to the present invention, since the pilot valve body which is independent from the second valve body is provided, in addition to the first control valve for the large flow rate (the first valve body and the first valve port) and the second control valve for the small flow rate (the second valve body and the second valve port), and the pilot valve body is structured such as to be driven so as to be opened and closed by utilizing the elevating motion of the valve shaft, it is possible to set the dimension and the shape of the second control valve for the small flow rate (the second valve body and the second valve port) to those which are optimum for the small flow rate control, and it is possible to securely carry out the opening and closing motion of the first control valve for the large flow rate at a desired timing. Further, since the cooling medium is circulated without passing through the narrow portion such as the sliding surface gap or the like as is different from the conventional structure, at a time of controlling the small flow rate, it is possible to make it hard for the malfunction to be generated. As a result, it is possible to achieve both the improvement of the flow rate control precision in the small flow rate region and the increase of the controllable flow rate (the reduction of the pressure loss) without causing the increase of the motion load and the enlargement in size of the drive portion (the motor portion) and the valve main body.

Further, since the composite valve according to the present invention is structured such that the pilot valve body is separated into the valve body member and the valve body pressing member which is independent from the valve body member, and is integrally moved up and down by energizing the valve body member and the valve body pressing member by the spring member, the incline of the valve body pressing member is hard to be transmitted to the valve body member even if the valve body pressing member is inclined, and the valve body member is hard to be adversely affected. Further, in the case that the portion (the seal portion) which is close to and away from the opening edge portion of the pilot passage is constructed by the spherical surface or the like, any undesired gap is not generated as is different from the conventional structure even if the valve body member is inclined. Further, since the seal portion forms the line contact in place of the surface contact in the conventional structure, the contact pressure becomes higher. Accordingly, the sealing performance is significantly improved, and it is possible to securely suppress any leakage without making the spring load of the valve closing spring so large or without making the working precision of the seal portion so high.

In addition, in the composite valve according to the present invention, since the pilot valve body, or the valve body pressing member constructing the pilot valve body is slidably accommodated in the inner wall of the member which covers the second valve chamber, a sliding area of the pilot valve body or the valve body pressing member becomes wider. Even if the high pressure is introduced from the pilot passage, the pilot valve body or the valve body pressing member is hard to be inclined. Therefore, there is no risk that the sealing performance of the pilot passage is lowered, and it is possible to securely prevent the pilot passage from being undesirably opened, whereby it is possible to enhance a reliability.

## BRIEF EXPLANATION OF THE DRAWINGS

Fig. 1 is a notched vertical cross sectional view showing a first motion state (a fully closed state) in an embodiment of a composite valve according to the present invention;
Fig. 2A is a cross sectional view as seen from an arrow X-X in Fig. 1;
Fig. 2B is a cross sectional view as seen from an arrow Y-Y in Fig. 7;
Fig. 3 is an enlarged detail view around a second control valve for a small flow rate and a pilot valve in Fig. 1;
Fig. 4A is an enlarged view of a portion A in Fig. 3;
Fig. 4B is a cross sectional view as seen from an arrow B-B in Fig. 4A;
Fig. 5 is a notched vertical cross sectional view showing a second motion state (a small flow rate control state) in the embodiment of the composite valve according to the present invention;
Fig. 6 is an enlarged cross sectional view around the pilot valve and shows a third motion state (a state just before switching from the small flow rate control to a large flow rate control) in the embodiment of the composite valve according to the present invention;
Fig. 7 is a notched vertical cross sectional view showing a fourth motion state (a large flow rate control state) in the embodiment of the composite valve according to the present invention;
Fig. 8 is an enlarged cross sectional view around the pilot valve and shows the fourth motion state (the large flow rate control state) in the embodiment of the composite valve according to the present invention;
Fig. 9A is a cross sectional view showing a substantial part (around the second control valve for the small flow rate and the pilot valve) of the composite valve which was proposed in advance;
Fig. 9B is an enlarged view of a portion Z in Fig. 9A;
Figs. 10A and 10B are views provided for describing a motion and a problem of the composite valve shown in Fig. 9, in which Fig. 10A is a view showing a state in which a valve shaft 125 moves up and a collar shaped catch portion 125g comes into contact with a pilot valve body 127, and Fig. 10B is a view showing a state in which the valve shaft 125 moves up further and the pilot valve body 127 moves up; and
Fig. 11 is a vertical cross sectional view showing an example of a conventional electrically operated valve.

### Description of Reference Numerals

| | |
|---|---|
| 1 | composite valve |
| 4A | first control valve for large flow rate |
| 4B | second control valve for small flow rate |
| 4C | pilot valve |
| 5 | inflow port |
| 6 | outflow port |
| 10 | valve main body |
| 11 | first valve chamber |
| 12 | first valve seat |
| 13 | first valve port |
| 14 | fitting and inserting chamber |

| 15 | first valve body |
|---|---|
| 16 | back pressure chamber |
| 17 | pressure equalizing hole |
| 18 | first valve closing spring |
| 19 | pilot passage |
| 19D | valve body guide hole |
| 21 | second valve chamber |
| 23 | second valve port |
| 24 | second valve body |
| 25 | valve shaft |
| 26 | pilot valve closing spring |
| 30 | rotor |
| 50 | stepping motor |
| 50A | stator |
| 60 | pilot valve body |
| 61 | valve body member |
| 62 | valve body pressing member |
| 64 | retaining body |
| 65 | ball |
| 66 | coil spring |
| 70 | thrust bearing |

## DETAILED DESCRIPTION OF PREFERRED EMBODIMENT

A description will be given below of an embodiment according to the present invention with reference to the accompanying drawings.

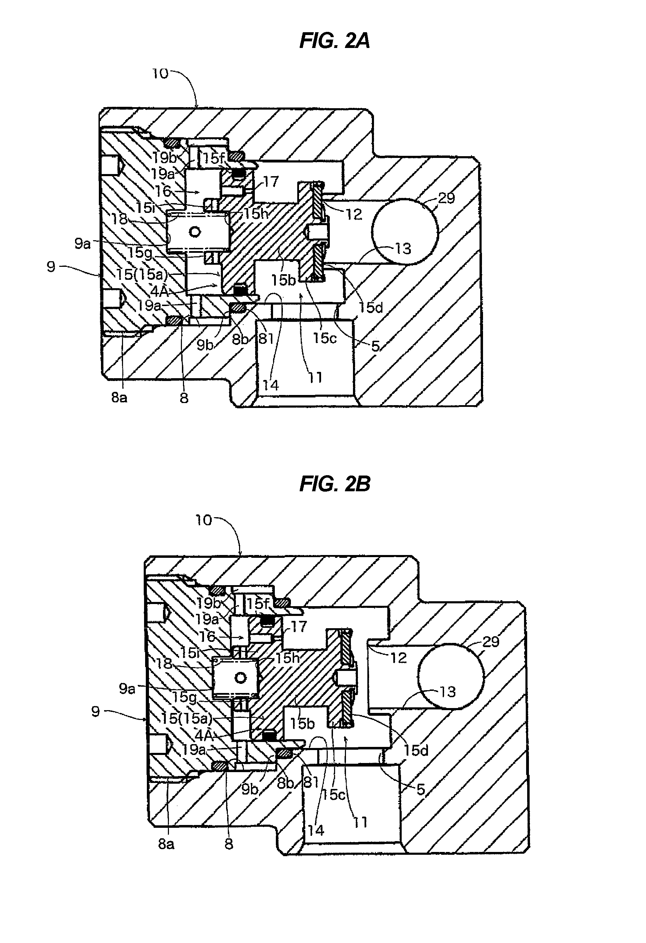

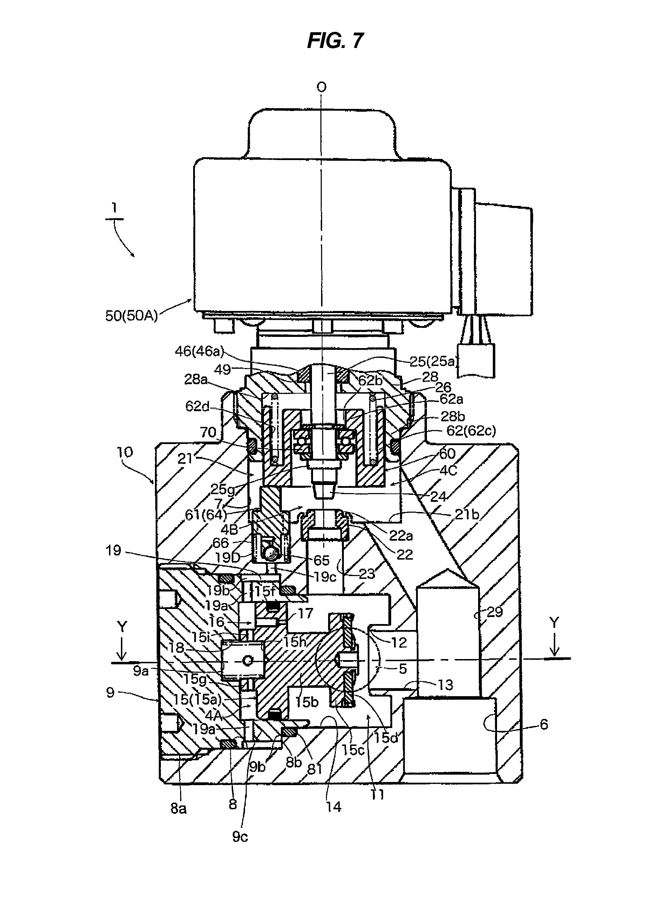

Fig. 1, 5 and 7 are notched vertical cross sectional views showing an embodiment according to the present invention, and the respective drawings show different motion states. Further, Fig. 2A is a cross sectional view as seen from an arrow X-X in Fig. 1 (first control valve for a large flow rate: closed state), and Fig. 2B is a cross sectional view as seen from an arrow Y-Y in Fig. 7 (first control valve for the large flow rate: open state). Since an internal structure of a stepping motor 50 portion of a composite valve 1 according to an illustrated embodiment is approximately the same as the conventional electrically operated valve 1' shown in Fig. 11, the portion shows only an outer shape. Further, in each of the drawings, the same reference numerals as those in Figs. 9 to 11 denote the same or similar portions.

The composite valve 1 according to the illustrated first embodiment is provided with a rectangular parallelepiped valve main body 10 which is larger than the valve main body 40 of the electrically operated valve 1' according to the prior art, a pilot type first control valve 4A (a first valve body 15 and a first valve port 13) for a large flow rate, a second control valve 4B (a second valve body 24 and a second valve port 23) for a small flow rate, and a pilot valve 4C (a pilot valve body 60 and a pilot passage 19) for opening and closing the first control valve 4A for the large flow rate, for achieving both of an improvement of a flow rate control precision at a time of a small flow rate and an increase of a controllable flow rate (a reduction of a pressure loss), the first control valve 4A for the large flow rate is arranged transversely, and the second control valve 4B for the small flow rate is arranged vertically.

In more detail, the valve main body 10 is structured such that an inflow port 5 (which is shown by a phantom line in Fig. 1 and is shown by a cross section (solid line) in Fig. 2) is provided in the vicinity of the center in a lateral direction in a front face (near) side and slightly closer to a lower portion in a vertical direction, an outflow port (a joint portion) 6 which is open in its lower surface is provided in a lower portion in a right side as seen in a lateral direction, a stepped concave hole 7 which is open in its upper surface and has a female thread portion is provided slightly closer to a left side in an upper portion, and a stepped transverse hole 8 which is directed transversely, is open in its left surface and has a female thread portion 8a and an annular terrace portion 8b is provided in a lower side of the concave hole 7. A first valve port 13 with first valve seat 12 is provided transversely in a right end side bottom portion of the transverse hole 8 so as to communicate the transverse hole 8 (a first valve chamber 11 mentioned later), an outflow passage 29 mentioned later and the outflow port 6.

A bush retention body 28 corresponding to an upper portion of the valve main body 40 in the conventional electrically operated valve 1' (refer to Fig. 11) is threadably fixed to an upper half portion of the stepped concave hole 7, a second valve chamber 21 is defined in a lower side than a cylinder portion 28b with ceiling surface 28a which is provided in a lower half portion of the bush retention body 28 in the concave hole 7, and the center of a bottom portion of the concave hole 7 is provided with a second valve port 23 which has a small bore diameter and is opened and closed by a second valve body 24 provided in a lower portion of a valve shaft 25 which is driven so as to move up and down by the motor 50. A valve seat member 22 forming a valve seat 22a which the second valve body 24 comes close to and away from is fixed to an upper end portion of the second valve port 23, for example, by caulking. Further, the second valve port 23 is extended in a vertical direction, and is communicated its lower portion with a first valve chamber 11 mentioned later.

The bush retention body 28 is provided with the fitting hole 49 which is mentioned above with regard to Fig. 11, and a lower end portion 46a of a tubular guide bush 46 is pressed into and fixed to the fitting hole 49.

A male thread portion is formed in an outer periphery of the guide bush 46, and a female thread portion is formed in an inner periphery of a valve shaft holder (reference numeral 32 in Fig. 11), and a feed screw mechanism for moving up and down the valve shaft 25 is constructed by the male thread portion and the female thread portion.

Further, an upper end of an outflow passage 29 communicating the second valve chamber 21 and the outflow port 6 is opened to a right corner portion in a bottom portion of the concave hole 7, and a left side of the second valve port 23 in the bottom portion of the concave hole 7 is provided with a valve body guide hole 19D to which a valve body member 61 in a pilot valve body 60 mentioned later and having a separated structure is slidably fitted and inserted.

In a right side of the first valve chamber 11 in the stepped transverse hole 8, a first valve seat 12 with first valve port 13 having a large bore diameter is provided, and the outflow passage 29 and the outflow port 6 connected thereto are formed.

A lid-shaped installation body 9 having a cylindrical guide portion 9c with ceiling surface 9a is threadably fixed to the female thread portion 8a of the stepped transverse hole 8. The cylindrical guide portion 9c is provided with an annular terrace portion 9b which comes into contact with the annular terrace portion 8b of the stepped transverse hole 8, and a periphery of the terrace portion 9b of the cylindrical guide portion 9c and a periphery of the terrace portion 8b of the stepped transverse hole 8 are sealed by an O-ring 81. Further, a fitting and inserting chamber 14 is formed in a left side than the bottom portion (the first valve seat 12 side) in the transverse hole 8 and in a right side than the ceiling surface 9a in the lid-shaped installation body 9, (a large diameter portion 15a of) a piston type first valve body 15 is slidably fitted and inserted to the cylindrical guide portion 9c in the fitting and inserting chamber 14, a back pressure chamber 16 is defined in a left side than (the large diameter portion 15a of) the first valve body 15 in the fitting and inserting chamber 14, and the first valve chamber 11 is defined in a right side than (the large diameter portion 15a of) the first valve body 15.

The first valve body 15 is formed as a bobbin shape having the large diameter portion 15a, a small diameter portion 15b and a middle diameter portion 15c sequentially from a left side, an annular seal member 15d which comes close to and away from the first valve seat 12 so as to open and close the first valve port 13, and is made of a rubber or a Teflon (trade mark) or the like is fixed to a right end portion thereof according to an appropriate method, for example, a caulking, a left end surface portion thereof is provided in a protruding manner with a stopper 15g with transverse hole 15i which comes into contact with the ceiling surface 9a of the fitting and inserting chamber 14 so as to define a leftward moving limit of the first valve body 15 and is formed as a short cylindrical shape, and a seal member (a piston ring) 15f is installed to an outer periphery of the large diameter portion 15a.

Further, a first valve closing spring 18 constructed by a compression coil spring is installed in a compression manner between a bottom surface of a spring bearing hole 15h which is provided in the center of a left end side of the first valve body 15 and the ceiling surface 9a of the fitting and inserting chamber 14, in order to energize the first valve body 15 rightward (in a valve closing direction).

Further, the large diameter portion 15a of the first valve body 15 is provided with a pressure equalizing hole 17 which is constructed by a penetrating passage for communicating the first valve chamber 11 with the back pressure chamber 16.

In addition to the structure mentioned above, in order to communicate the back pressure chamber 16 with the second valve chamber 21, there is provided with a pilot passage 19 which is open its upper end to the bottom surface 21 b of the second valve chamber 21. The pilot passage 19 is constructed by four through holes 19a which are provided in a radial pattern, for example, at 90 degrees intervals, near the ceiling surface 9a in the cylindrical guide portion 9c of the lid-like installation body 9 in such a manner as to pass therethrough in a thickness direction, an annular blank space 19b which is defined in an airtight manner in an outer peripheral side of the cylindrical guide portion 9c and in an inner peripheral side of the stepped transverse hole 8, a vertical hole 19c which is open its one end to the blank space 19b and is open its other end to the bottom portion of the valve body guide hole 19D, and the valve body guide hole 19D, and is structured such that a ball 65 of a pilot valve body 60 mentioned later comes close to and away from the upper end open edge portion 19e of the vertical hole 19c, whereby the pilot passage 19 is opened and closed.

On the other hand, the pilot valve body 60 of the pilot valve 4C is constructed by a valve body member 61 which is slidably fitted and inserted to the valve body guide hole 19D, and a valve body pressing member 62 which is outward inserted to the lower shaft portion 25a of the valve shaft 25 so as to move the valve body member 61 close to and away from the opening edge portion 19e of the pilot passage 19, and is structured such as to be pulled up by the valve shaft 25 if a lift amount of the valve shaft 25 goes beyond a predetermined amount Tc.

In order to make the valve body pressing member 62 be pulled up by the valve shaft 25 at a time when the valve shaft 25 is lifted up while going beyond the predetermined amount Tc, a collar shaped locking portion 25g is formed in the valve shaft 25, and a thrust bearing (a ball bearing) 70 is outward inserted and retained on the collar shaped locking portion 25g in a state in which an inner peripheral portion thereof is pinched by an annular locking plate 71 and an E-type stop ring 72.

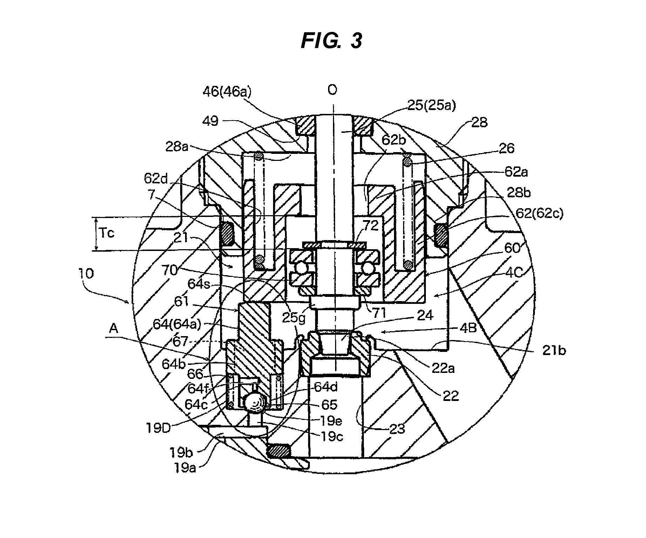

As can be well known with reference to Fig. 3, the valve body pressing member 62 is constructed by a ceiling portion 62a which is provided in the center portion thereof with an insertion hole 62b outward inserted to the lower shaft portion 25a of the valve shaft 25, and a cylinder portion 62c which is slidably fitted and inserted to the cylinder portion 28b with ceiling surface 28a which is provided in the lower half portion of the bush retention body 28. The cylinder portion 62c is provided with an annular spring bearing hole 62d which is open its upper surface, and a compression coil spring 26 which energizes the valve body pressing member 62 downward (a direction of closing the pilot passage 19) is installed in a compression manner between a bottom surface of the spring bearing hole 62d and the ceiling surface 28a. In this case, a hole diameter of the insertion hole 62b is set to be larger than an outer diameter of the E-type stop ring 72, and is structured such that an upper surface outer peripheral portion of the thrust bearing 70 comes into contact with a lower surface of the ceiling portion 62a at a time when the valve shaft 25 is lifted up while going beyond the predetermined amount Tc.

The bush retention body 28 covers the second valve chamber 21 in such a manner as to be fitted to an inner side of an upper portion of the second valve chamber 21. Further, the valve body pressing member 62 is provided in such a manner as to slide on an inner wall of the bush retention body 28.

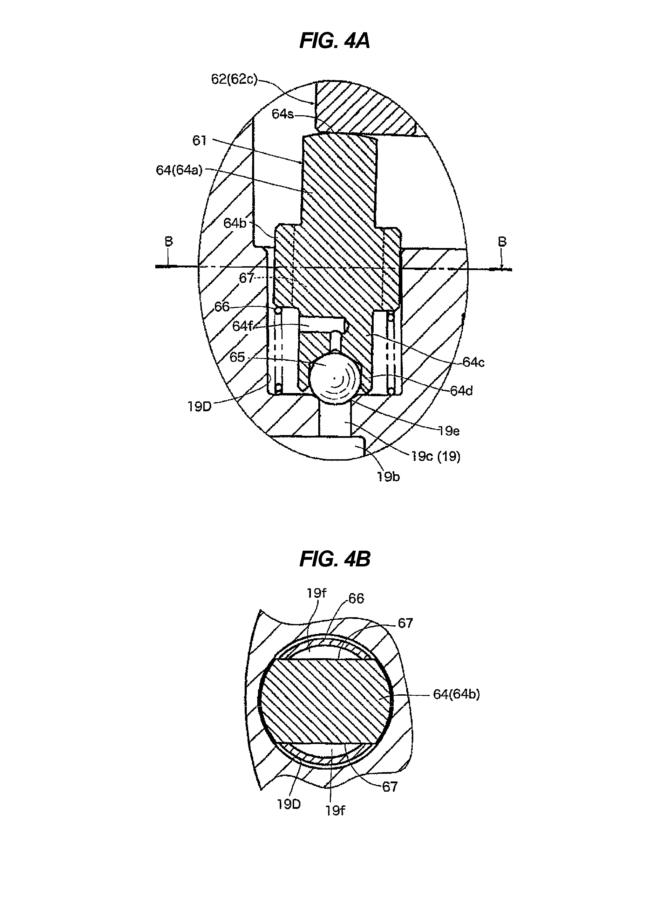

As can be well known with reference to Fig. 4 in addition to Fig. 3, the valve body member 61 is constructed by the ball 65 which is moved close to and away from the opening edge portion 19e of the pilot passage 19, and a retention body 64 which retains the ball 65. In more detail, the retention body 64 is constructed by an upper small diameter portion 64a, an intermediate large diameter portion 64b, a lower small diameter portion 64c and a caulking portion 64d sequentially from an upper side. In the upper small diameter portion 64a, a top surface portion 64s, for example, constructed by a spherical surface comes into contact with a lower surface of the cylinder portion 62c of the valve body pressing member 62. The caulking portion 64d retains the ball 65. Further, the intermediate large diameter portion 64b has parallel chamfer portions 67 and 67 and forms a distribution passage 19f (a part of the bypass passage 19) between the parallel chamfer portions 67 and 67 and an inner peripheral surface of the valve body guide hole 19D, as shown in Fig. 4B. Further, a transversely inverted L-shaped hole 64f communicating an inner side of the caulking portion 64d and an external portion is formed within the lower small diameter portion 64c. In Fig. 4, the main body member 61 is inclined in relation to the center shaft of the valve body guide hole 19D, however, the opening edge portion 19e can be well sealed on the basis of an action of the ball 65 even under this state.

In this case, the caulking portion 64d may be structured such as to hold the ball 65 in a rotatably state.

Further, a compression coil spring 66 energizing the valve body member 61 upward (in a direction of opening the pilot passage 19) is provided in a compression manner between a lower surface of the intermediate large diameter portion 64b and a bottom surface of the valve body guide hole 19D. The top surface portion 64s of the valve body member 61 is normally brought into contact with a lower surface of the cylinder portion 62c of the valve body pressing member 62 by the coil spring 66.

In this case, in the composite valve 1 according to the present embodiment, on the assumption that a pressure of the first valve chamber 11 is set to P1, a pressure of the back pressure chamber 16 is set to P2, a pressure of the first valve port 13 is set to P3, a horizontal cross sectional area of the back pressure chamber 16 (a pressure bearing area of the first valve body 15) is set to Ap, a horizontal cross sectional area of the first valve port 13 is set to Av, an energizing force of the main valve opening spring 18 is set to Pf, a force for pushing up the first valve body 15 is set to a vale opening force, and a force for pushing down the first valve body 15 is set to a valve closing force, a valve opening condition of the first control valve for the large flow rate is as follows.

$$\text{Valve closing force} = P2 \times Ap + Pf < \text{valve opening force} = P1 \times (Ap - Av) + P3 \times Av$$

In this case, in the present embodiment, in order to reduce an abrasion in the contact portion and the sliding portion, and improve sealing performance and a durability, the valve shaft 25 (the valve body 24) is made of a stainless steel, and the valve seat 22a (the valve seat member 22) is made of the stainless steel in the same manner as the valve shaft 25 (the valve body 24). Further, the lid-like installation body 9 is also made of the stainless steel. On the other hand, the valve main body 10 can be made of an aluminum.

In the composite valve 1 structured as mentioned above, in the case that the first valve body 15, the second valve body 24 and the pilot valve body 27 are in a closed state as shown in Fig. 1, the high pressure cooling medium which is introduced into the first valve chamber 11 from the inflow port 5 is introduced into the back pressure chamber 16 via the pressure equalizing hole 17, and the pressure of the back pressure chamber 16 comes to a high pressure.

Therefore, the first valve body 15 is strongly pressed to the first valve seat 12.

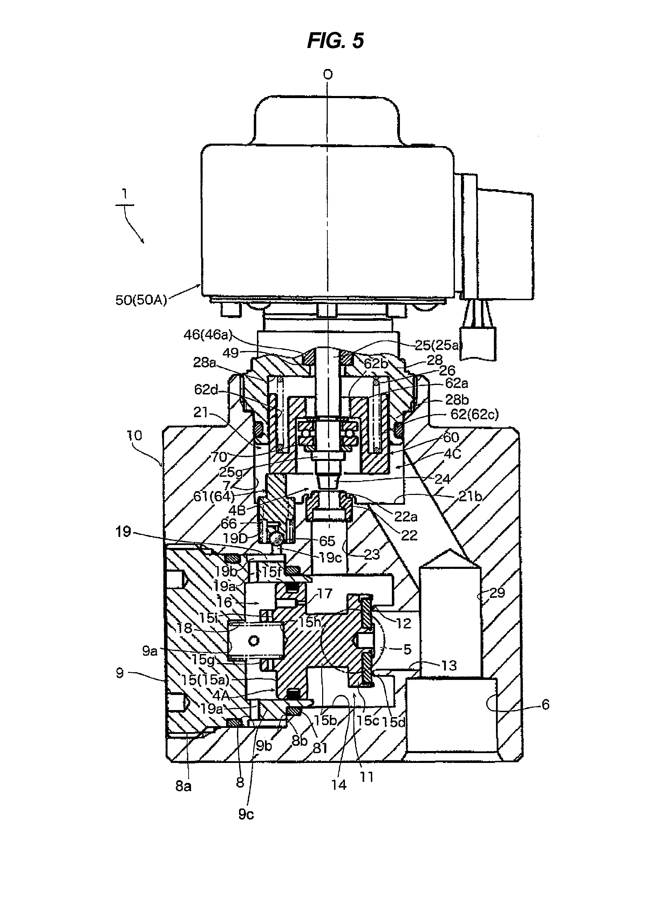

If the valve shaft 25 and the second valve body 24 are moved up while being rotated by carrying out a pulse supply to the motor 50 from this state, the second valve body 24 is disconnected from the second valve seat 22a and the second valve port 23 is opened as shown in Fig. 5. In this case, in the case that a lift amount of the valve shaft 25 and the second valve body 24 is less than a predetermined amount Tc (refer to Figs. 1 and 3), the outer peripheral portion of the upper surface of the thrust bearing 70 does not reach the lower surface of the ceiling portion 62a. Therefore, the valve body pressing member 62 and the valve body member 61 constructing the pilot valve body 60 are maintained in the state shown in Fig. 1. At this time, the pilot passage 19 is closed by the ball 65 of the pilot valve body 60, and the first valve port 13 is closed by the first valve body 15, thereby coming to a small flow rate control state in which the flow rate of the cooling medium (the opening degree of the second control valve) is controlled in correspondence to a lift amount of the second valve body 24. In this small flow rate control state, the cooling medium at a corresponding amount to the lift amount of the second valve body 24 flows to the inflow port 5 → the first valve chamber 11 → the second valve port 23 → the second valve chamber 21 → the outflow passage 29 → the outflow port 6.

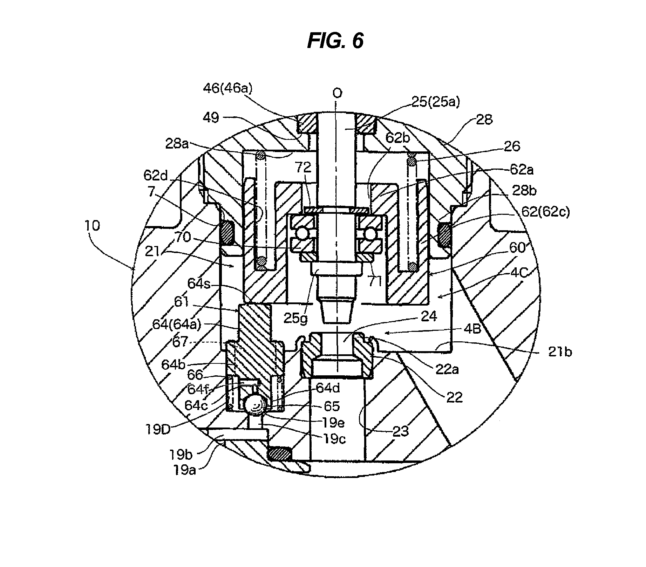

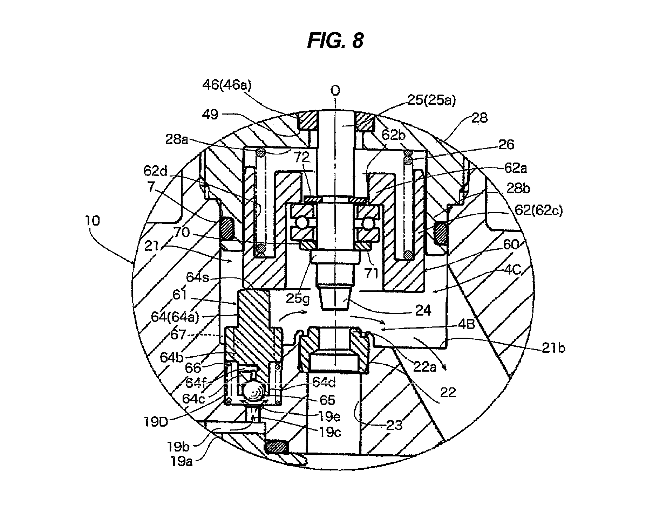

Further, if the lift amount of the valve shaft 25 and the second valve body 24 reaches the predetermined amount Tc, the outer peripheral portion of the upper surface of the thrust bearing 70 comes into contact with the lower surface of the ceiling portion 62a as shown in Fig. 6. Sequentially, if the valve shaft 25 and the second valve body 24 are further moved up while being rotated, and the lift amount goes beyond the predetermined amount Tc, the valve body pressing member 62 is caught on the outer peripheral portion of the upper surface of the thrust bearing 70 and is lifted up against the energizing force of the valve closing spring 26, as shown in Figs. 7 and 8. On the basis of this, the valve body member 61 is moved upward by the energizing force of the coil spring 66 in a state in which the top surface portion 64s is kept in contact with the lower surface of the cylinder portion 62c of the valve body pressing member 62. Accordingly, the ball 65 is disconnected from the upper end opening edge portion 19e of the vertical hole 19c, and the pilot passage is opened and the cooling medium is introduced into the second valve chamber 21 from the back pressure chamber 16 via the pilot passage 19, and is introduced to the outflow port 6 via the outflow passage 29 therefrom. Accordingly, the pressure of the back pressure chamber 16 falls down, the valve opening force becomes finally larger than the valve closing force which acts on the first valve body 15, and the first valve body 15 opens the first valve port 13, thereby coming to the large flow rate control state in which the cooling medium flows to the inflow port 5 → the first valve chamber 11 → the first valve port 13 → the outflow port 6.

As is understood from the description mentioned above, since the composite valve 1 according to the present embodiment is structured such that the pilot valve body 60 which is independent from the second valve body 24 is provided, in addition to the first control valve 4A (the first valve body 15 and the first valve port 13) for the large flow rate, and the second control valve 4B (the second valve body 24 and the second valve port 23) for the small flow rate, and the pilot valve body 60 is driven so as to be opened and closed by utilizing the elevating motion of the valve shaft 25, it is possible to set the dimension and the shape of the second control valve 4B (the second valve body 24 and the second valve port 23) for the small flow rate to ones which are optimum for the small flow rate control, and it is possible to securely carry out the opening and closing motion of the first control valve 4A for the large flow rate at a desired timing. Further, since the cooling medium is structured such as to be circulated without being passed through the narrow portion such as the sliding surface gap or the like as is different from the conventional structure at a time of the small flow rate control, it is possible to make the malfunction hard be caused. As a result, it is possible to achieve both of an improvement of the flow rate control precision in the small flow rate region and an increase of the controllable flow rate (a reduction of the pressure loss) without causing an increase of the motion load and an enlargement in size of the driving portion (the motor portion) and the valve main body.

Further, since the pilot valve body 60 is structured such as to be separated into the valve body member 61 having the ball 65 as the seal surface, and the valve body pressing member 62 which is independent from the valve body member 61, and is integrally moved up and down by energizing these members by the spring members 26 and 66, a tilt of the valve body pressing member 62 is hard to be transmitted to the valve body member 61 even if the valve body pressing member 62 is tilted, and a sealing performance of the pilot passage by the valve body member 61 is hard to be adversely affected. Further, since the portion (the seal portion) which comes close to and away from the opening edge portion 19e of the pilot passage 19 is constructed by the spherical surface (the ball 65), an undesired gap β (refer to Fig. 9B) is not generated as is different from the conventional structure even if the valve body member 61 is tilted. Further, since the seal portion is in the line contact in place of the conventional surface contact, a contact pressure thereof becomes higher. Therefore, a sealing performance is significantly improved, and it is possible to securely prevent a leakage without making the spring load of the valve closing spring 26 so large, or without making a working precision of the seal portion so high.

Further, since the thrust bearing 70 is arranged as the collar shaped catch portion in the valve shaft 25, the valve body pressing member 62 is caught on the outer peripheral portion of the upper surface of the thrust bearing 70 in the case that the valve shaft 25 and the second valve body 24 are further lifted beyond the predetermined amount Tc while being rotated, thereby being pulled up against the energizing force of the valve closing spring 26. In this case, since the lower surface side of the thrust bearing 70 is integrally rotated with the valve shaft 25, however, the upper surface side of the thrust bearing 70 and the valve body pressing member 62 contacted thereby do not rotate, the conventional rotational sliding friction resistance is hardly generated between the valve shaft 25 and the pilot valve body 60. Accordingly, the rotation and the elevation of the valve shaft 25 are not prevented, and it is possible to securely prevent the malfunction.

In this case, it goes without saying that the composite valve according to the present invention is not limited to the structure of the composite valve 1 according to the first embodiment mentioned above, but various modifications can be applied thereto.

For example, in the composite valve 1 according to the embodiment, the second valve port 23 is structured such as to communicate the first valve chamber 11 and the second valve chamber 21, however, may be structured a little differently as follows. In other words, the second valve portion is communicated with the outflow port, the communication path communicating the first valve chamber and the second valve chamber is independently provided, and the high pressure in the first valve chamber is introduced into the second valve chamber via the communication path, thereby preventing the high pressure from acting on the second valve body in the valve closing state. Therefore, it is possible to securely prevent the second valve body from being undesirably opened without enlarging the spring load of the valve closing spring (reference numeral 34 in Fig. 11) which energizes the second valve body (the valve shaft) in the valve closing direction), and it is possible to reduce a constraint in relation to the bore diameter of the second valve port. As a result, it is possible to achieve a cost reduction, a downsizing and a reduction of an electric power consumption (refer to Japanese Patent Application No. 2011-273975 which was filed on December 15, 2011 by the applicant of the present invention).

Further, in the embodiment, the valve body member 61 is structured such that the portion coming close to and away from the opening edge portion 19e of the pilot passage 19 is constructed by the ball 65, however, does not necessarily use the ball, but may be structured such that the seal surface is constructed by any curved surface such as a spherical surface, an oval spherical surface and a circular cone surface, which substantially comes into line contact with the opening edge portion 19e.

Further, in the embodiment, the first valve body is arranged transversely and the second valve body is arranged vertically, however, it goes without saying that the first valve body and the second valve body may employ the other aspects, for example, both the first valve body and the second valve body are arranged vertically.

Further, in the embodiment mentioned above, since the valve shaft 25 pulling up the valve body pressing member 62 moves up while rotating, the description is given of the structure in which the thrust bearing 70 is interposed between the collar shaped locking portion 25g and the valve body pressing member 62, however, in the case that the valve shaft moves up without rotating, the bearing 70 may be unnecessary.

Further, in the embodiment mentioned above, the description is given of the valve body pressing member 62 structured such as to be provided slidably in the inner wall of the bush retention body 28 which is fitted to the inner side of the second valve chamber 21 and covers the second valve chamber, however, the present invention is not limited only to this, but may be of course structured such that the valve body pressing member 62 is slidably provided in an inner wall of a member which does not retain the guide bush 46, as long as the member is fitted to the inner side of the second valve chamber 21 and covers the second valve chamber 21.

Further, in the embodiment mentioned above, the electrically operated type structure (the stepping motor 50) is employed as the elevation driving means for moving up and down the valve shaft, however, the present invention can be applied in the same manner to a structure which employs an electromagnetic type (a magnetic force suction type) structure.

Further, it goes without saying that the composite valve according to the present invention can be applied not only to the heat pump type cooling and heating system but also to the other systems.

Further, in the embodiment, since the valve body pressing member 62 is provided in such a manner as to slide on the inner wall of the bush retention body 28, it is possible to make a sliding area of the valve body pressing member 62 large in comparison with the case that the valve body pressing member 62 slides on the inner wall of the second valve chamber 21 provided in the valve main body 10. As a result, the slope of the valve body pressing member 62 is reduced at a time of pulling up the valve body pressing member 62 caused by the upward movement of the valve shaft 25.

Therefore, in place of the structure in which the pilot valve body 60 is constructed by the valve body member 61 and the valve body pressing member 62, it is possible to employ a structure in which the valve body member 61 is omitted, and the pilot passage 19 (the vertical hole 19c) is opened and closed only by the valve body pressing member 62. In this case, the valve body pressing member 62 serves as the pilot valve body.

**Claims**

1. A composite valve comprising:

a piston type first valve body (15);

a valve shaft (25) provided with a needle type second valve body (24);

an elevation driving means (50) moving said valve shaft (25) up and down

a pilot valve body (60) driven so as to be opened and closed by utilizing the elevating motion of said valve shaft (25);

a valve main body (10) provided with an inflow port (5) and an outflow port (6);

the composite valve being structured such that between said inflow port (5) and the outflow port (6) in said valve main body (10), there are provided a fitting and inserting chamber (14) to which said first valve body (15) is slidably fitted and inserted, and which is comparted into a back pressure chamber (16) and a first valve chamber (11) by said first valve body (15), a first valve port (13) which is open to said first valve chamber (11), a second valve chamber (21) in which said pilot valve body (60) and the second valve body (24) are arranged so as to be movable up and down, a second valve port (23) which communicates said inflow port (5) or the first valve chamber (11) with said second valve chamber (21), and a pilot passage (19) which is open at its upper end to a bottom surface of said second valve chamber (21) so as to communicate said back pressure chamber (16) with said second valve chamber (21), and

the composite valve being structured such that in the case that a lift amount of said second valve body (24) is equal to or less than a predetermined amount (Tc), said pilot passage (19) is closed by said pilot valve body (60), and said first valve port (13) is closed by said first valve body (15), thereby taking a small flow rate control state in which a flow rate is controlled in correspondence to the lift amount of the second valve body (24), and in the case that the lift amount of said second valve body (24) goes beyond said predetermined amount (Tc), said pilot valve body (60) is moved up in conjunction with the upward movement of said valve shaft (25) so as to open said pilot passage (19), thereby taking a large flow rate control state in which said first valve body (15) opens said first valve port (13) on the basis of this motion,

**characterized in that** said pilot valve body (60) comprises:

a valve body member (61); and

a valve body pressing member (62) which is energized downward by a spring member (26) so as to position said valve body member (61) close to or away from an opening edge portion of said pilot passage (19), and is pulled up against an energizing force of said spring member (26) by a catch portion (70) provided in said valve shaft (25), if the lift amount of said second valve body (24) is increased further from said predetermined amount (Tc).

2. The composite valve according to claim 1, **characterized in that** a spring member (66) energizing said valve body member (61) upward is provided.

3. The composite valve according to claim 1 or 2, **characterized in that** said valve body member (61) is constructed by a curved surface in which a seal surface which is positioned close to or away from an opening edge portion of said pilot passage (19) substantially comes into line contact with said opening edge portion constructed by a spherical surface, an oval spherical surface or a circular cone surface.

4. The composite valve according to claim 3, **characterized in that** said valve body member (61) is constructed by a ball (65) which is positioned close to or away from an opening edge portion of said pilot passage (19), and a retaining body (64) which holds said ball (65).

5. The composite valve according to any one of claims 1 to 4, **characterized in that** said first valve body (15) is provided with a pressure equalizing hole (17) which communicates said first valve chamber (11) with said back pressure chamber (16).

6. The composite valve according to any one of claims 1 to 5, **characterized in that** said first valve body (15) is arranged transversally and said second valve body (24) is arranged vertically.

7. The composite valve according to any one of claims 1 to 5, **characterized in that** said first valve body (15) and said second valve body (24) are both arranged in a vertical direction and are separated from each other at a predetermined distance in a transverse direction.

8. The composite valve according to any one of claims 1 to 7, **characterized in that** said elevation driving means (50) is structured such as to move said valve shaft (25) up and down while rotating.

# EP 2 650 575 B1

**Patentansprüche**

1. Ein mehrteiliges Ventil, das die folgenden Merkmale aufweist:

einen kolbenartigen ersten Ventilkörper (15);
einen Ventilschaft (25), der mit einem nadelartigen zweiten Ventilkörper (24) ausgestattet ist;
eine Höhentriebeinrichtung (50), die den Ventilschaft (25) auf und ab bewegt;
einen Steuerventilkörper (60), der angetrieben wird, um unter Verwendung der Hebebewegung des Ventilschafts (25) geöffnet und geschlossen zu werden;
einen Ventilgrundkörper (10) der mit einer Einströmöffnung (5) und mit einer Ausströmöffnung (6) ausgestattet ist;
wobei das mehrteilige Ventil so aufgebaut ist, dass zwischen der Einströmöffnung (5) und der Ausströmöffnung (6) in dem Ventilgrundkörper (10) eine Einpass- und Einsetzkammer (14), in die der erste Ventilkörper (15) verschiebbar eingepasst und eingesetzt ist, und die durch den ersten Ventilkörper (15) in eine Gegendruckkammer (16) und eine erste Ventilkammer (11) aufgeteilt ist, eine erste Ventilöffnung (13), die zu der ersten Ventilkammer (11) hin offen ist, sowie eine zweite Ventilkammer (21) in welcher der Steuerventilkörper (60) und der zweite Ventilkörper (24) so angeordnet sind, dass sie auf und ab bewegbar sind, sowie eine zweite Ventilöffnung (23), welche die Einströmöffnung (5) oder die erste Ventilkammer (11) mit der zweiten Ventilkammer (21) verbindet, und ein Steuerungsdurchlass (19), der an seinem oberen Ende zu einer Bodenfläche der Ventilkammer (21) hin offen ist, um die Gegendruckkammer (16) mit der zweiten Ventilkammer (21) zu verbinden, vorgesehen sind, und wobei das mehrteilige Ventil so aufgebaut ist, dass in dem Fall, dass eine Hubhöhe des zweiten Ventilkörpers gleich oder kleiner als ein vorbestimmter Wert (Tc) ist, der Steuerungsdurchlass (19) durch den Steuerventilkörper (60) geschlossen wird und die erste Ventilöffnung (13) durch den ersten Ventilkörper (15) geschlossen wird und dadurch einen Steuerzustand entsprechend einer kleinen Durchflussmenge annimmt, in dem eine Durchflussmenge entsprechend einer Hubhöhe des zweiten Ventilkörpers (24) gesteuert wird, und in dem Fall, dass eine Hubhöhe des zweiten Ventilkörpers den vorbestimmten Wert (Tc) überschreitet, der Steuerventilkörper (60) zusammen mit der Aufwärtsbewegung des Ventilschafts (25) nach oben bewegt wird, um den Steuerungsdurchlass (19) zu öffnen, und dadurch einen Steuerzustand entsprechend einer hohen Durchflussmenge annimmt, in dem der erste Ventilkörper (15) die erste Ventilöffnung (13) auf Grundlage dieser Bewegung öffnet,
**gekennzeichnet dadurch**, dass der Steuerventilkörper (60) aufweist:

ein Ventilkörperteil (61); und
ein Ventilkörperandruckteil (62), das durch ein Federteil (26) nach unten beaufschlagt wird, um das Ventilkörperteil (61) nahe bei oder entfernt von einem Öffnungskantenbereich des Steuerdurchlasses (19) zu positionieren, und das durch einen Arretierungsbereich (70), der in dem Ventilschaft (25) vorgesehen ist, entgegen einer Beaufschlagungskraft des Federteils (26) nach oben gezogen wird, wenn die Hubhöhe des zweiten Ventilkörpers (24) über den vorbestimmten Wert (Tc) hinaus vergrößert wird.

2. Das mehrteilige Ventil gemäß Anspruch 1, **dadurch gekennzeichnet, dass** ein Federteil (66) vorgesehen ist, welches das Ventilkörperteil (61) nach oben beaufschlagt.

3. Das mehrteilige Ventil gemäß Anspruch 1 oder Anspruch 2, **gekennzeichnet dadurch**, dass das Ventilkörperteil (61) durch eine gekrümmte Oberfläche gebildet ist, in der eine Dichtungsfläche, die nahe bei oder entfernt von einem Öffnungskantenbereich des Steuerdurchgangs (19) positioniert wird, im Wesentlichen in einen linienförmigen Kontakt mit dem Öffnungskantenbereich kommt, der durch eine sphärische Fläche, eine ovale sphärische Fläche oder eine Fläche eines Kreiskegels gebildet wird.

4. Das mehrteilige Ventil gemäß Anspruch 3, **dadurch gekennzeichnet, dass** das Ventilkörperteil (61) durch eine Kugel (65) gebildet wird, die nahe bei oder entfernt von einem Öffnungskantenbereich des Steuerdurchgangs (19) angeordnet ist, und ein Festhaltekörper (64), der die Kugel (65) festhält.

5. Das mehrteilige Ventil gemäß einem der Ansprüche 1 bis 4, **gekennzeichnet dadurch** dass
der erste Ventilkörper (15) mit einem Druckausgleichsloch (17) versehen ist, das die erste Ventilkammer (11) mit der Gegendruckkammer (16) verbindet.

6. Das mehrteilige Ventil gemäß einem der Ansprüche 1 bis 5, **dadurch gekennzeichnet, dass** der erste Ventilkörper (15) in Querrichtung angeordnet ist und dass der zweite Ventilkörper (24) senkrecht angeordnet ist.

**7.** Das mehrteilige Ventil gemäß einem der Ansprüche 1 bis 5, **dadurch gekennzeichnet, dass** der erste Ventilkörper (15) und der zweite Ventilkörper (24) beide in einer vertikalen Richtung angeordnet und in einer Querrichtung durch einen vorbestimmten Abstand voneinander getrennt sind.

**8.** Das mehrteilige Ventil gemäß einem der Ansprüche 1 bis 7, **dadurch gekennzeichnet, dass** die Höhentriebeinrichtung (50) so aufgebaut ist, dass der Ventilschaft (25) beim Rotieren auf und ab bewegt wird.

**Revendications**

**1.** Valve composée comprenant:

un premier corps de valve (15) pistonique;
une tige de valve (25) équipé d'un second corps de valve (24) en forme d'aiguille;
un moyen d'entrainement d'élévation (50) mouvant la tige de valve (25) haut et bas;
un corps de valve de commande (60) qui est entrainé afin d'être ouvert et fermé en utilisant le mouvement d'élévation de la tige de valve (25);
un corps de base de valve (10) qui est équipé d'un orifice d'entrée (5) et d'un orifice de sortie (6);
la valve composée étant construite de sorte, que entre l'orifice d'entrée (5) et l'orifice de sortie (6) dans le corps de base de valve (10), la valve composée est pourvue d'une chambre de montage et insertion (14) à laquelle le premier corps de valve (15) est monté et inséré de manière coulissante, et qui est répartie en une chambre de contre-pression (16) et une première chambre de valve (11) par le corps de valve (15), un premier orifice de valve (13) qui est ouvert vers la premier chambre de valve (11), une seconde chambre de valve (21) dans laquelle le corps de valve de commande (60) et le second corps de valve (24) sont arrangés afin d'être déplaçable haut et bas, un second orifice de valve (23) qui communique l'orifice d'entrée (5) ou la premier chambre de valve (11) avec la seconde chambre de valve (21), et un passage de commande (19) qui est ouvert à son bout supérieur vers une surface de fond de la seconde chambre de valve (21) afin de communiquer la chambre de contre-pression (16) avec la seconde chambre de valve (21),
la valve composée étant construite de sorte que, au cas où une quantité de levée du second corps de valve (24) soit égal ou inférieur à une quantité (Tc) prédéterminée, le passage de commande (19) est fermé par le corps de valve de commande (60), et le premier orifice de valve (13) est fermé par le premier corps de valve (15), ainsi prenant un état de contrôle de faible débit de fleuve dans lequel un débit de fleuve est contrôlé en correspondance avec la quantité de levée du second corps de valve (24), et au cas où la quantité de levée du second corps de valve (24) dépasse la quantité (Tc) prédéterminée, le corps de valve de commande (60) est déplacé vers le haut conjointement avec le mouvement vers le haut de la tige de valve (25) afin d'ouvrir le passage de commande (19), ainsi prenant un état de contrôle de fort débit de fleuve dans lequel le premier corps de valve (15) ouvre le premier orifice de valve (13) sur la base dudit mouvement,
**caractérisée en ce que** le corps de valve de commande (60) comprend:

un membre de corps de valve (61); et
un membre de pression de corps de valve (62) qui est chargé vers le bas par un membre de ressort (61) pour positionner le membre de corps de valve (61) proche ou éloigné d'une partie de bord d'ouverture du passage du commande (19), et qui est tiré vers le haut contre une force d'actionnement du membre de ressort (26) par une partie d'arrête (70) qui est pourvue dans la tige de valve (25), si la quantité de levée du second corps de valve (24) est augmenté au-dessus de la quantité prédéterminée (Tc).

**2.** La valve composée selon revendication 1, **caractérisée en ce que** la valve composée est équipée d'un membre de ressort (66) qui appuie le membre de corps de valve (61) vers le haut.

**3.** La valve composée selon revendication 1 ou revendication 2, **caractérisée en ce que** le membre de corps de valve (61) est formé par une surface courbée dans laquelle une surface d'étanchéité, qui est positionné près ou éloignée d'une partie de bord d'ouverture du passage de commande (19), vient sensiblement en contact linéaire avec la partie de bord d'ouverture par une surface sphérique, une surface ovale-sphérique, ou une surface type cône circulaire.

**4.** La valve composée selon revendication 3, **caractérisée en ce que** le membre de corps de valve (61) est formé par une balle (65) qui est positionnée près ou éloignée d'une partie de bord d'ouverture du passage de commande (19) et par un corps de fixation (64) qui tient la balle (65).

**5.** La valve composée selon l'une quelconque des revendications 1 à 4, **caractérisée en ce que** le premier corps de valve (15) est équipé d'une ouverture de compensation de pression (17) qui communique la premier chambre de valve (11) avec la chambre de contre-pression (16).

**6.** La valve composée selon l'une quelconque des revendications 1 à 5, **caractérisée en ce que** le premier corps de valve (15) est arrangé transversalement et le second corps de valve (24) est arrangé verticalement.

**7.** La valve composée selon l'une quelconque des revendications 1 à 5, **caractérisée en ce que** le premier corps de valve (15) et le second corps de valve (24) sont tous les deux arrangés dans une direction verticale et sont séparés l'un à l'autre par une distance prédéterminée dans une direction verticale.

**8.** La valve composée selon l'une quelconque des revendications 1 à 7, **caractérisée en ce que** le moyen d'entrainement d'élévation (50) est formé afin de mouvoir la tige de valve (25) de haut en bas en pivotant.

## FIG. 1

## FIG. 2A

## FIG. 2B

## FIG. 3

EP 2 650 575 B1

*FIG. 4A*

62(62c)
64s
61
64(64a)
64b
B          B
67
66
64f
65
64c
64d
19D
19e
19c (19)
19b

*FIG. 4B*

19f   66
67
64(64b)
67
19D   19f

21

## FIG. 5

**FIG. 6**

## FIG. 7

## FIG. 8

## FIG. 9A

## FIG. 9B

ENLARGED VIEW OF
PORTION Z

## FIG. 10A

## FIG. 10B

## FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1435495 A2
- WO 2007149229 A1
- JP 3799732 B
- JP 4416528 B
- JP 2011068451 A
- JP 2012202499 A
- JP 2011273975 A